# EUROPÄISCHE PATENTSCHRIFT

(11) **EP 3 892 947 B1**
(45) Veröffentlichungstag und Bekanntmachung des Hinweises auf die Patenterteilung: **12.01.2022**
(21) Anmeldenummer: 20168812.4
(22) Anmeldetag: 08.04.2020
(51) Int. Cl.: F27D 3/15, F27D 25/00

(54) **VORRICHTUNG UND VERFAHREN ZUR PFLEGE DES ABSTICHLOCHS EINES ELEKTRISCHEN LICHTBOGENOFENS**
DEVICE AND METHOD FOR MAINTAINING THE TAP HOLE OF AN ELECTRIC ARC FURNACE
DISPOSITIF ET MÉTHODE D'ENTRETIEN DU TROU DE COULÉE D'UN FOUR À ARC ÉLECTRIQUE

(43) Veröffentlichungstag der Anmeldung: 13.10.2021
(73) Patentinhaber: Badische Stahl-Engineering GmbH, 77694 Kehl (DE)
(72) Erfinder: VOLKERT, Andreas, 77694 Kehl (DE); SCHREIBER, Danny, 77694 Kehl (DE); FUCHS, Sven, 77731 Willstätt-Legelshurst (DE); SCHWEIKLE, Ralf, 79261 Gutach im Breisgau (DE)
(74) Vertreter: Kramer Barske Schmidtchen Patentanwälte PartG mbB

(56) Entgegenhaltungen:
- JP-A- H10 219 329
- US-A- 4 679 773
- US-A- 4 875 663

## Beschreibung

Die vorliegende Erfindung betrifft eine Vorrichtung zur Pflege des Abstichlochs eines elektrischen Lichtbogenofens.

Elektrische Lichtbogenöfen sind z.B. aus der EP 0 385 434 A2 oder der DE 85 30 922 U1 bekannt. Ein Abstichloch ist in der EP 0 385 434 A2 z.B. in den Fig. 3 und 8 mit dem Bezugszeichen 21, und in Fig. 1 der DE 85 30 922 U1 mit dem Bezugszeichen 3 bezeichnet.

Elektrische Lichtbogenöfen (ELBO, auch Englisch Electric Arc Furnace = EAF) gibt es in verschiedenen Bauformen in Bezug auf die Gestaltung des Abstichs. Abstich (Englisch tapping oder tap) bezeichnet als Vorgang das Auslaufen lassen oder Ausgießen des flüssigen Stahls aus dem Schmelzgefäß bei der Stahlherstellung und bezeichnet als Vorrichtung die entsprechende Gestaltung des metallurgischen Schmelzgefäßes.

ELBOs können einen Abstich in Form einer Abstichrinne (Englisch tapping spout) oder eines Abstichlochs (Englisch tap hole oder tapping hole) oder einer Kombination derselben wie einem Siphonabstich (Englisch submerged tap hole) haben. Es gibt verschiedene Bauformen von ELBOs mit Abstichlöchern, wie z.B. ELBOs mit einem zentrischen Bodenabstich (Englisch centric bottom tapping =CBT), ELBOs mit einem seitlichen Bodenabstich (Englisch offset bottom tapping = OBT), oder ELBOs mit einen exzentrischen Bodenabstich (Englisch excentric bottom tapping = EBT). Bei einem ELBO mit OBT ist das Ofenuntergefäß kreisrund und das Abstichloch gegenüber dem Mittelpunkt versetzt angeordnet. Bei einem ELBO mit EBT weist das Ofenuntergefäß einen Erker auf, in dem das Abstichloch angeordnet ist.

Die verschiedenen Bauformen unterscheiden sich z.B. in der Art und Weise, wie sie betrieben werden können. Je nach Bauform ist ein Betrieb mit oder ohne Sumpf (Sumpf = im Gefäß verbleibende flüssige Schmelze nach einem Abstich) möglich. Es gibt Unterschiede in den für einen Abstich nötigen Kippwinkeln und der daraus resultierenden Konstruktion, Unterschiede in den notwendigen Kabellängen für die Stromzufuhr und daher in der Reaktanz, Unterschiede in der Möglichkeit das Mitlaufen von Schlacke zu verringern, usw.

Im Hinblick auf das Abstichloch gibt es verschiedene Anforderungen und Probleme, die sich teilweise auch abhängig von der Bauform unterscheiden.

Es kann zu Stahl- oder Schlackeablagerungen (Verbärungen) in dem Abstichloch oder an dessen Eingang kommen. Es können Bruchstücke der Elektroden oder Bruchstücke der feuerfesten Auskleidung des Ofengefäßes in dem Abstichloch oder an dessen Eingang liegen, klemmen, festbacken, oder ähnliches. Beides führt zu potentiellen Blockaden oder mindestens starken Durchmesseränderungen des Abstichlochs, die beseitigt werden müssen.

Das erfolgt im Stand der Technik z.B. durch Freibrennen mit Hilfe einer Sauerstofflanze, die durch eine seitliche Öffnung in das Ofengefäß des ELBO eingeführt wird. In der DE 40 34 809 A1 ist ein sogenannter Lanzenroboter gezeigt, der auf dem Boden (Festland) an eine seitliche Öffnung des kippbaren Ofengefäßes eines ELBO herangefahren werden kann und eine Lanze automatisch oder halbautomatisch von oben an das Abstichloch oder andere Teile des Ofens fährt. Eine ähnliche Vorrichtung ist aus der WO 86/02437 A1 bekannt, bei der ein Manipulator mit Lanze auf dem Boden (Festland) montiert ist und durch eine seitliche Ofentür in das Ofengefäß eingeführt werden kann. Aus der DE 10 2009 051 145 A1 ist es bekannt, eine solche Lanze an einem direkt oder indirekt auf dem Boden (Festland) befestigten Industrieroboter zu befestigen und mittels des Roboters zu bewegen und zum Aufbrennen des Abstichlochs eines ELBO zu verwenden.

Aus der AT 403 774 B und der EP 2 482 019 A1 ist es bekannt, eine solche Lanze zu Aufbrennen der Ausflußöffnung einer Gießpfanne zu verwenden. In der EP 2 482 019 A1 ist die Lanze dazu an einem Industrieroboter zu befestigt und wird mittels des Roboters bewegt.

Die US 4,875,663 offenbart eine Abstichlochreinigungsvorrichtung, bei der eine Düse an einem Arm unter ein Abstichloch verschwenkt wird und längs der Längsachse des Abstichlochs von unten an das Abstichloch herangefahren wird. An der Austrittsöffnung des Abstichlochs befindliche Ablagerungen können durch Sauerstoff oder eine Mischung aus Sauerstoff und Brennergas entfernt werden. Die US 4,679,773 offenbart einen EAF mit einem Abstichloch mit einer horizontalen Längsachse. Die JPH10-219329 (A) offenbart eine Lanze zur Vorbehandlung von Eisen und zur Entfernung von Metallanhaftungen in einem Converter, die von oben durch die Öffnung des Converters eingeführt wird, die an der Spitze nach vorne gerichtete Düsen mit einem Innendurchmesser von z.B. 20 bis 26 mm und die seitlich schräg nach hinten gerichtete Unterdüsen aufweist.

In der vorliegenden Lehre geht es hauptsächlich um eine Vorrichtung zur Pflege des Abstichlochs eines Ofengefäßes eines elektrischen Lichtbogenofens (ELBO/EAF) mit exzentrischem Bodenabstich (EBT) oder mit seitlichem Bodenabstich (OBT), insbesondere um das Freiräumen und/oder Freibrennen. Ein ELBO mit EBT oder OBT erlaubt in vorteilhafter Weise eine Konstruktion mit geringen Kippwinkeln (≤18°), die zum Abstich notwendig sind.

Aufgabe der Erfindung ist es, die Pflege des Abstichlochs eines Ofengefäßes eines elektrischen Lichtbogenofens zu verbessern, ohne die konstruktiven Vorteile des Ofens zu beeinflussen.

Diese Aufgabe wird gelöst durch eine Vorrichtung zur Pflege des Abstichlochs eines Ofengefäßes nach Anspruch 1 und einen elektrischen Lichtbogenofen nach Anspruch 11 und ein Verfahren zur Reinigung eines Abstichlochs nach Anspruch 13.

Weiterbildungen der Erfindung sind in den abhängigen Ansprüchen angegeben.

Mit der Abstichlochpflegevorrichtung nach Anspruch 1 und dem elektrischen Lichtbogenofens nach Anspruch 11 wird es möglich, das Bodenabstichloch des Ofengefäßes direkt nach dem Zurückkippen des Ofens nach einem Abstich durch Durchfahren des Abstichlochs von unten und anschließenden Zurückfahren von Fremdkörpern zu befreien und zu reinigen.

Die Gestaltung ermöglicht, einerseits die konstruktionsbedingt möglichen, kleinen Kippwinkel zu erhalten und andererseits das Abstichloch von unten durch das Abstichloch zu reinigen.

Die Gestaltung ermöglicht weiterhin, das Abstichloch von unten durch das Abstichloch automatisiert zu reinigen. Dazu ist es vorteilhaft,
- den Schwenkarm mit Wasser zu kühlen, um Längenänderungen und andere wärmebedingte Verformungen, die die Positionsgenauigkeit des Verfahrens/Bewegens des Lanzenkopfs beeinträchtigen, zu vermindern, und/oder
- die Verfahrwege und damit die Positionsgenauigkeit des Verfahrens/Bewegens des Lanzenkopfs zu erfassen, und/oder
- die vom Lanzenkopf ausgeübte Kraft zu erfassen, um Beschädigungen des Abstichlochs und/oder der Feuerfestauskleidung des Ofengefäßes zu vermeiden.

Weitere Merkmale und Zweckmäßigkeiten ergeben sich aus der Beschreibung von Ausführungsbeispielen anhand der Figuren. Von den Figuren zeigen:
- Fig. 1: eine erste Ausführungsform eines elektrischen Lichtbogenofens mit EBT in einer zurück gekippten Stellung mit einer Abstichlochpflegevorrichtung mit Schwenkarm in einer Parkposition in einer Querschnittsansicht;
- Fig. 2: einen elektrischen Lichtbogenofen mit EBT in einer waagerechten Stellung in einer Querschnittsansicht zur Veranschaulichung eines Problems einer Blockade des Abstichlochs;
- Fig. 3: die erste Ausführungsform des elektrischen Lichtbogenofens mit EBT in der zurück gekippten Stellung mit der Abstichlochpflegevorrichtung mit Schwenkarm in einer Pflegeposition und Lanzenkopf in einer unteren Endposition in a) in einer Querschnittsansicht, in b) in einer perspektivischen Querschnittsansicht von schräg vorne, und in c) in einer perspektivischen Querschnittsansicht von vorne;
- Fig. 4: die erste Ausführungsform des elektrischen Lichtbogenofens mit EBT in der zurück gekippten Stellung mit der Abstichlochpflegevorrichtung mit Schwenkarm in einer Pflegeposition und Lanzenkopf in einer in das Abstichloch eingefahrenen Position in einer Querschnittsansicht;
- Fig. 5: die erste Ausführungsform des elektrischen Lichtbogenofens mit EBT in der zurück gekippten Stellung mit der Abstichlochpflegevorrichtung mit Schwenkarm in einer Pflegeposition und Lanzenkopf in einer Position nach Durchfahren durch das Abstichloch in a) in einer Querschnittsansicht, in b) in einer perspektivischen Querschnittsansicht von schräg vorne, und in c) in einer perspektivischen Querschnittsansicht von vorne;
- Fig. 6: die erste Ausführungsform des elektrischen Lichtbogenofens mit EBT in der zurück gekippten Stellung mit der Abstichlochpflegevorrichtung mit Schwenkarm in einer Pflegeposition und Lanzenkopf in einer oberen Endposition in einer perspektivischen Querschnittsansicht von schräg vorne;
- Fig. 7: eine erste Ausführungsform der Abstichlochpflegevorrichtung in einer perspektivischen Ansicht;
- Fig. 8: eine erste Ausführungsform eines Lanzenkopfs in einer perspektivischen Ansicht in a) in einer Außenansicht und in b) in einer aufgeschnittenen Ansicht;
- Fig. 9: eine zweite Ausführungsform eines Lanzenkopfs in einer perspektivischen Ansicht in a) in einer Außenansicht und in b) in einer aufgeschnittenen Ansicht; und
- Fig. 10: eine dritte Ausführungsform eines Lanzenkopfs in einer perspektivischen Ansicht in a) in einer Außenansicht und in b) in einer aufgeschnittenen Ansicht.

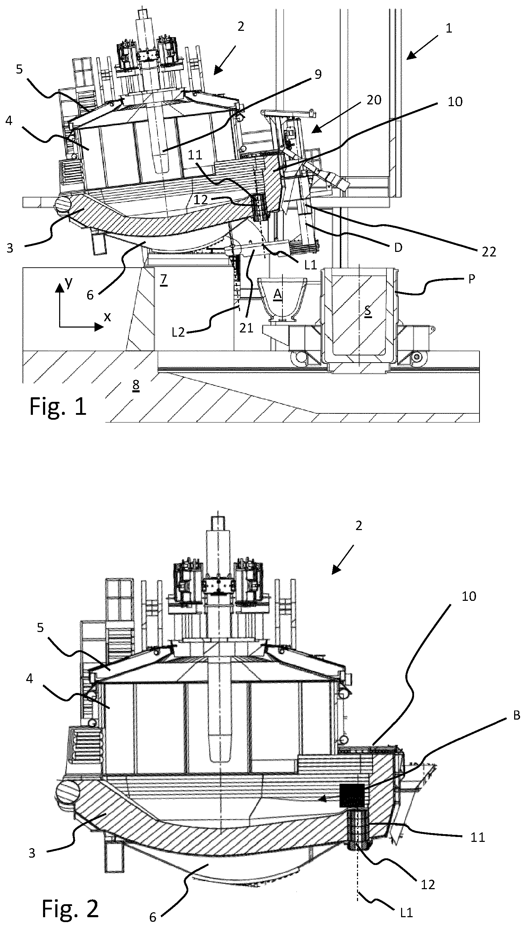

Fig. 1 zeigt eine Querschnittsansicht einer ersten Ausführungsform eines elektrischen Lichtbogenofens (ELBO) 1 mit exzentrischem Bodenabstich (EBT) 11 auf der in Fig. 1 rechten Seite. Der ELBO weist ein Ofengefäß 2 mit einem Ofenuntergefäß 3, einem Ofenobergefäß 4 und einem Ofendeckel 5 auf. Das Ofengefäß 2 ist über eine Ofenkippvorrichtung mit einer Ofenwiege 6 und einem nicht gezeigten Hydraulikzylinder kippbar auf einem Fundament 7 gelagert. Das Fundament 7 ist auf einem auch Festland genannten Boden 8 befindlich. In Fig. 1 ist ein Koordinatensystem x-y gezeigt. Die Richtung x zeigt bei dem ELBO in horizontaler Richtung von hinten nach vorne und die Richtung y zeigt in Richtung senkrecht zum Boden von unten nach oben. Eine nicht durch einen Pfeil dargestellte Richtung z ist senkrecht zu x und y aus der Papierebene gerichtet. Das Ofengefäß 2 ist in einer aus einer waagerechten Stellung zurück (nach hinten in x-Richtung) gekippten Stellung gezeigt. In eine solche zurück gekippte Stellung wird das Ofengefäß am Ende eines Abstichvorgangs möglichst schnell gekippt, um das Mitreißen von Schlacke beim Abstich soweit möglich zu verhindern. Der dargestellte ELBO ist ein mit Wechselstrom betriebener ELBO und weist drei Elektroden 9 (nur eine dargestellt) auf, die im Betrieb durch den Ofendeckel 5 in das Ofengefäß ragen.

Bei einem ELBO mit EBT weist das Ofenuntergefäß 3 einen Erker 10 auf. Ein solcher Erker 10 ist ein Teil des Ofenuntergefäßes 3, der in x-Richtung nach vorne über den Umfang des Ofenobergefäßes 4 vorragt. In dem Erker ist der exzentrische Bodenabstich (EBT) 11 angeordnet. Das Ofenuntergefäß 3 weist eine äußere Hülle auf, die mit feuerfestem Material ausgekleidet ist (Zustellung). Der EBT 11 weist ein Abstichloch 12 auf, das sich entlang einer Längsachse L1 (des Abstichlochs) linear durch das Ofenuntergefäß 3, also durch die äußere Hülle und die Zustellung erstreckt. Das Abstichloch 12 ist während des Einschmelzens und vor dem Abstich an der Unterseite des Ofenuntergefäßes 3 mit einem Schieber (nicht gezeigt) verschlossen und mit einem feuerfesten Füllmaterial verfüllt.

Das Abstichloch hat am Beginn einer Ofenreise, d.h., des Zeitraums der Nutzbarkeit einer Zustellung bevor diese erneuert werden muss, einen vorgegebenen anfänglichen Durchmesser, z.B. 140 mm oder 180 mm, der entlang der Längsachse L1 konstant ist. Der Durchmesser und die Form des Abstichlochs verändern sich während der Nutzung des ELBO durch die stark abrasive Wirkung des flüssigen Stahls und gegebenenfalls der Schlacke in Richtung einer Trichterform und der Durchmesser wird größer. Daher muss die feuerfeste Auskleidung des Abstichlochs 12 in der Regel häufiger erneuert werden als die übrige feuerfeste Auskleidung des Ofens. Das erfolgt in der Regel durch Austauschen des sogenannten Abstichsteins, also des das Abstichloch bildenden Teils der feuerfesten Auskleidung. Dieser ist in Fig. 1 (und in Fig. 2) durch unterschiedliche Schraffierung als von der übrigen Auskleidung unterschiedliches Bauteil erkennbar.

Nach dem Abstechen, d.h., dem Abgießen des flüssigen Stahls durch das Abstichloch, das durch allmähliches Kippen des Ofengefäßes nach vorne und anschließendes schnelles Zurückkippen in die entgegen gesetzt gekippte Stellung erfolgt, wird das Abstichloch im Stand der Technik mit einer Sauerstofflanze, die durch ein Loch in der Ofenwand o.ä. geführt und bewegt wird, von oben gereinigt. Die Reinigung erfolgt, da vor dem nächsten Einschmelzvorgang das Abstichloch mit einem feuerfesten Sand verfüllt wird. Dazu muss es gereinigt werden, z.B. von anhaftendem Stahl oder Schlackeresten o.ä.

Der ELBO 1 weist zu diesem Zweck eine Abstichlochpflegevorrichtung 20 mit einem Schwenkarm 21, der an einer Säule 22 angebracht ist und in Fig. 1 in einer Parkposition befindlich ist. Die Abstichlochpflegevorrichtung 20 wird weiter unten beschrieben.

In Fig. 2 ist ein elektrischer Lichtbogenofen mit EBT in einer waagerechten Stellung in einer Querschnittsansicht zur Veranschaulichung eines Problems einer Blockade des Abstichlochs 12 gezeigt. Wie bereits eingangs beschrieben wurde, kann es zu Stahl- oder Schlackeablagerungen (Verbärungen) in dem Abstichloch oder an dessen Eingang kommen. Es können Bruchstücke der Elektroden oder Bruchstücke der feuerfesten Auskleidung des Ofengefäßes in dem Abstichloch oder an dessen Eingang liegen, klemmen, festbacken, oder ähnliches. Beides führt zu potentiellen Blockaden oder mindestens starken Durchmesseränderungen des Abstichlochs, die beseitigt werden müssen. In Fig. 2 ist schematisch ein Gegenstand B, der die obere Öffnung des Abstichlochs 12 blockiert, gezeigt. Dieser Gegenstand B könnte ein solches Bruchstück der Elektroden oder der feuerfesten Auskleidung sein. Es muss von der Öffnung des Abstichlochs 12 wegbewegt werden, wie durch den Pfeil angedeutet ist.

Zu diesem Zweck ist die Abstichlochpflegevorrichtung 20 vorgesehen, deren Gestaltung, Anordnung und Betriebsweise nachfolgend beschrieben wird. In allen Figuren werden dieselben Bezugszeichen für dieselben oder entsprechende Merkmale verwendet, außer wenn es ausdrücklich anders beschrieben wird, und die Beschreibung derselben wird nicht wiederholt.

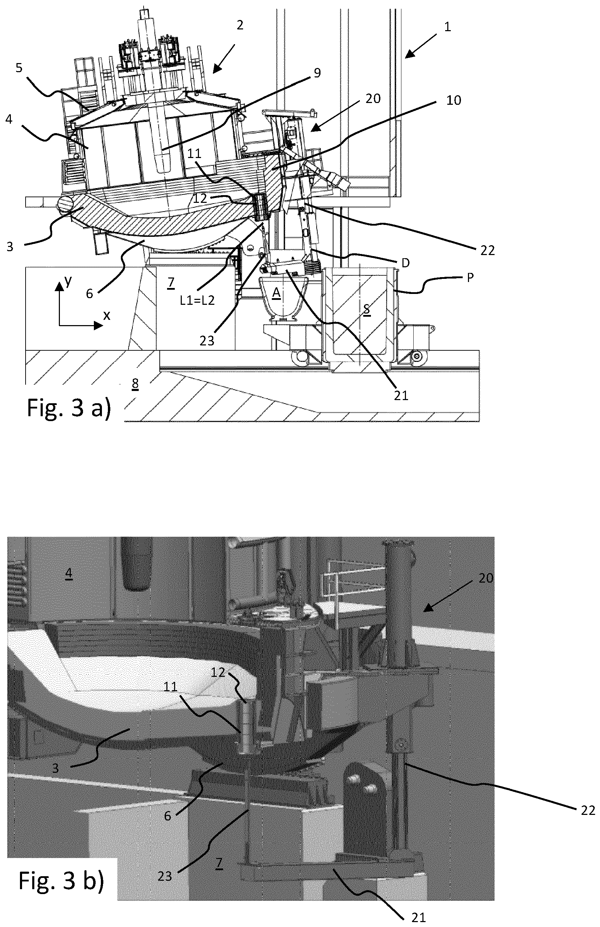

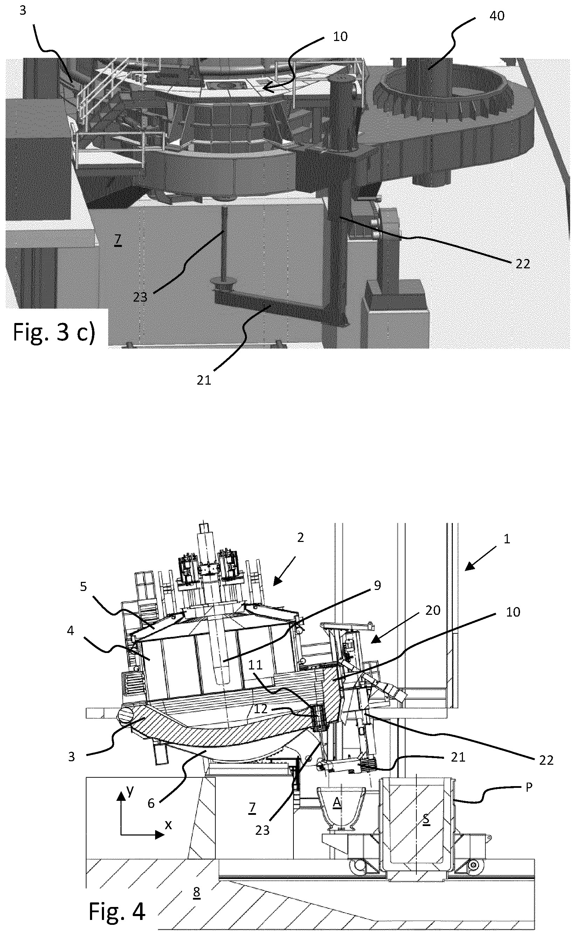

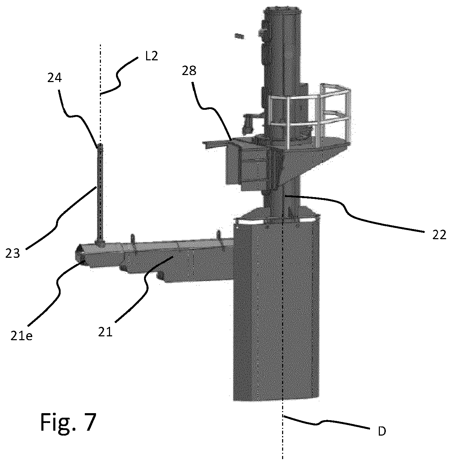

Wie in den Fig. 1 und 7 gezeigt ist, weist die Abstichlochpflegevorrichtung 20 den Schwenkarm 21, der an der Säule 22 angebracht ist und in Fig. 1 in einer Parkposition befindlich ist, auf. Die Säule 21 ist eine um eine Drehachse D drehbar gelagerte Säule, die längs ihrer Drehachse D auf und ab verfahrbar ist. Die Säule 21 weist einen Flansch 28 zur Befestigung an dem Ofengefäß 2 und/oder an der Wiege 6 des ELBO auf. Die Säule ist dazu angepasst, dass ihre Drehachse D parallel zu der Längsachse L1 des Abstichlochs 12 justierbar ist. Der Schwenkarm 21 ist als ein Ausleger der Säule 22 ausgebildet. Dadurch ist der Schwenkarm 21 durch Drehung der Säule 22 um ihre Drehachse D um dieselbe verschwenkbar. Der Schwenkarm 21 ist zwischen der Parkposition aus Fig. 1 und einer Pflegeposition verschwenkbar, die in Fig. 3 gezeigt ist. Der Schwenkarm 21 ist wassergekühlt. Die Wasserkühlung verhindert übermäßige Längenänderungen des Schwenkarms 21.

Eine Lanze 23 ist an einem Endabschnitt 21e des Schwenkarms 21 befestigt. Die Lanze 23 erstreckt sich entlang einer Längsachse L2. Die genaue Position der Lanze 23 an dem Endabschnitt 21e ist entlang des Schwenkarms 21 und damit in radialer Richtung von der Drehachse D justierbar. Die Lanze 23 ist so an dem Endabschnitt 21e angebracht, dass sich Längsachse L2 der Lanze 23 parallel zu der Drehachse D der Säule erstreckt. Da die Drehachse D parallel zu der Längsachse L1 des Abstichlochs 12 justierbar ist, erstrecken sich im richtig justierten Zustand die Längsachsen L1 und L2 und die Drehachse D parallel zueinander.

Die in Fig. 3 gezeigte Pflegeposition ist so gewählt, dass in dieser Schwenkposition des Schwenkarms 21, wenn der radiale Abstand der Lanze 23 von der Drehachse D richtig eingestellt ist (Abstand D zu L1 gleich Abstand D zu L2), die Längsachsen L1 und L2 koaxial sind.

Der Schwenkarm 21 und damit die daran befestigte Lanze 23 sind so durch Auf- und Abbewegung der Säule 22 längs der Drehachse D mit dieser entlang der Drehachse auf und ab bewegbar. Zum Bewegen der Säule 22 längs der Drehachse D ist ein doppelt wirkender Hydraulikzylinder vorgesehen. Zum Schwenken des Schwenkarms um die Drehachse D ist ein Antrieb mit Elektromotor vorgesehen. Selbstverständlich könnten auch andere Antriebsarten genutzt werden, wie z.B. ein Elektroantrieb für die Auf- und Abbewegung, aber die beschriebene Ausführung ist derzeit bevorzugt.

Die Abstichlochpflegevorrichtung 20 weist Meßwertaufnehmer auf, die zur Erfassung der bei der Schwenkbewegung des Schwenkarms 21 und der Auf- und Abbewegung der Säule 22 und damit der Spitze der Lanze 23 zurück gelegten Wegstrecken dienen, und die Daten werden an eine nicht gezeigte Steuerung ausgegeben. Eine Positionerfassung in den Endstellungen dient zur Korrekturwerterfassung.

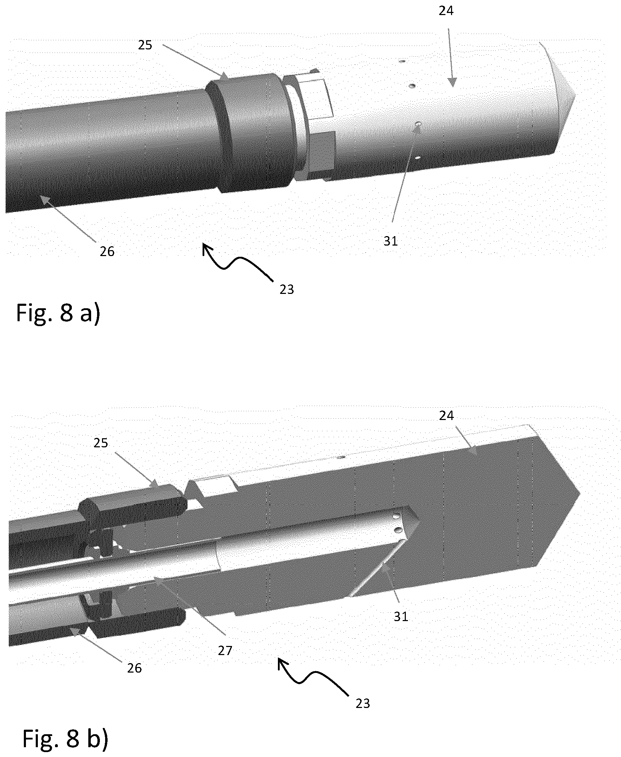

Die Lanze 23 weist einen Lanzenkopf 24 auf. Der Lanzenkopf 24 weist einen Außendurchmesser auf, der kleiner als der Nenndurchmesser (Anfangsdurchmesser = Mindestdurchmesser) des Bodenabstichlochs 12 ist. Der Lanzenkopf weist seitliche Sauerstoffaustrittdüsen 31, 32, 33 (siehe Fig. 8 bis 10) mit einem Austrittswinkel schräg zur Längsachse L2 der Lanze 23 nach unten auf. Der Lanzenkopf und seine Ausgestaltung werden weiter unten detaillierter beschrieben

In der in Fig. 3 gezeigte Pflegeposition ist so die Lanze 23 und damit der Lanzenkopf 24 durch Auf- und Abbewegung der Säule 22 längs der Drehachse D koaxial zu der Längsachse L1 des Abstichlochs 12 zwischen einer unteren Endposition des Lanzenkopfs 24 und einer oberen Endposition des Lanzenkopfs 24 durch das Abstichloch (12) bewegbar ist.

Alternativ wäre auch eine andere Bewegung des Lanzenkopfs 24 durch das Abstichloch 12, z.B. durch eine Ausbildung der Lanze als hydraulisch oder elektrisch angetriebenes Teleskop etc. denkbar, aber die beschriebene Ausführung ist derzeit bevorzugt.

Die Abstichlochpflegevorrichtung 20 kann in einer spezifischen Ausführung die Säule 22, die mit einer drehend gelagerten Stahlkonstruktion mit innenliegenden Führungsprofilen einer dreidimensional verstellbaren Schweißkonsole, einer verfahrbaren inneren Säule, innenliegenden Führungsrollen, einem doppelt wirkenden Hydraulikzylinder mit integriertem Wegmesssystem zur Realisierung der Hubbewegung ( z.B. 2 m), Druckerfassung und möglicher Sperrung des Zylinders, einer innenliegenden Sauerstoffleitung, einem elektrischen Antrieb der Drehbewegung mit integriertem Absolutwertgeber, einer Endlagenüberwachung in Endposition (zur Kalibrierung), mechanischen Endanschlägen zur Begrenzung der Drehbewegung, Schutzblechen zum Schutz gegen Anhaftungen, hüttengerechter Medien- und Kabelführung, Sauerstoff- und Kühlwasserversorgung mittels freihängenden Schläuchen zum Festland, einer SPS Steuerung in einem Schaltschrank, zwei Bedienungsterminals und einer kabelgebundene Fernbedienung, einem Hydraulikventilschrank, und Wartungsöffnungen zur Inspektion ausgebildet ist, einen wassergekühlten Ausleger als Schwenkarm 21, bestehend aus einer Rohrkonstruktion, und eine Sauerstoff durchströmten Lanze 23, die radial zum Drehpunkt verstellbar ist, mit Düsenkopf zum Ausstoßen des Sauerstoffs aufweisen.

In Fig. 3 ist derselbe ELBO wie in Fig. 1 in der zurück gekippten Stellung gezeigt, bei dem die Abstichlochpflegevorrichtung 20 mit dem Schwenkarm 21 in der Pflegeposition und dem Lanzenkopf 24 in seiner unteren Endposition in a) in einer Querschnittsansicht, in b) in einer perspektivischen Querschnittsansicht von schräg vorne, und in c) in einer perspektivischen Querschnittsansicht von vorne gezeigt ist.

Wie in Fig. 3 in allen drei Ansichten a), b) und c) gut zu erkennen ist, ist die Lanze 23 in der gezeigte Pflegeposition koaxial zu der Längsachse L1 des Abstichlochs 12 ausgerichtet. Außerdem ist die Säule 22 gegenüber der Parkposition längs der Drehachse D nach unten verfahren, so dass der Schwenkarm 21 und damit der Lanzenkopf 24 in ihrer/seiner unteren Endposition sind.

Wie in Fig. 3c) in Verbindung mit Fig. 7 gut zu erkennen ist, ist die Abstichlochpflegevorrichtung 20 über den Flansch 28 an der Plattform der Wiege 6 seitlich (in z-Richtung) vor dem Erker 10 befestigt.

Auf derselben Seite ist ein Portal 40 seitlich neben (in z-Richtung hinter) dem Ofengefäß 2, von dem das Ofenuntergefäß 3 mit dem Erker 10 teilweise dargestellt ist, vorgesehen. Das Portal 40 dient in bekannter Weise zum Halten und Anheben der Elektrode(n) 9 und zum Anheben des Deckels 5. Wie sich aus dem Vergleich der Fig. 1 und 3 a) und c) ergibt, ist der Schwenkarm 21 in der Parkposition gegenüber der Pflegeposition in Richtung einer Seite des Ofens, hier der Seite des Portals 40, verschwenkt und nach oben gefahren. Dadurch sind der Schwenkarm 21 und die Lanze 23 aus dem Weg, wenn ein Pfannenwagen mit eine Pfanne P zum Abstich unter den EBT 11 gefahren wird. Offensichtlich ist durch das derartige seitliche Parken auch keine Änderung der Kippwinkel erforderlich. In Fig. 1 und 3 a) ist der Ofen direkt nach einem Abstichvorgang gezeigt und die Pfanne P ist mit flüssigem Stahl S gefüllt. Vorne auf dem Pfannenwagen steht ein Abfallbehälter A, der unter dem Abstichloch 12 positionert ist und gegebenfalls bei der Reinigung aus dem Abstichloch 12 fallende Gegenstände auffängt.

Zur Reinigung wird der Lanzenkopf 24 zuerst von unten durch das Abstichloch 12 nach oben ohne Ausstoßen von Sauerstoff bewegt und dabei werden Fremdkörper aus dem Abstichloch 12 bewegt oder von dessen oberer Öffnung weggeschoben. Das erfolgt automatisiert unter Auswertung der erfassten Bewegungsdaten durch die Steuerung. Danach wird der Lanzenkopf 24 von oben zurück durch das Abstichloch 12 unter Ausstoßen von Sauerstoff nach unten bewegt und dabei das Abstichloch 12 freigebrannt, also von Anlagerungen befreit.

Die von dem Lanzenkopf 24 bei dem Verfahren ausgeübte Kraft wird erfasst, z.B. durch Erfassen des Drucks des Hydraulikzylinders oder einen Kraftmesssensor etc. Das automatisierte Verfahren des Lanzenkopfs 24 zwischen der unteren Endposition und der oberen Endposition erfolgt so, dass bei Erreichen eines Grenzwertes für die von dem Lanzenkopf ausgeübte Kraft das automatisierte Verfahren des Lanzenkopfs gestoppt wird. Der Grenzwert beträgt zwischen 400N und 1000N, bevorzugt zwischen 400n und 800N, z.B. 500N oder 600N oder 700N. Der Grenzwert wird so gewählt, dass bei einem unbeabsichtigten Kontakt des Lanzenkopfs 24 mit der feuerfesten Auskleidung diese nicht stark beschädigt werden kann. Bei Überschreiten des Grenzwerts wird das automatische Verfahren gestoppt und der Lanzenkopf 24 in die untere Endposition zurückgefahren. Der Grund für die hohe Kraft muss von einem Bediener z.B. durch Beobachtung herausgefunden und gegebenenfalls beseitigt werden, bevor entweder das automatisierte Durchfahren wieder gestartet werden kann oder eine manuelle Steuerung durchgeführt wird.

In Fig. 4 ist das Bewegen der Lanze 23 mit dem Lanzenkopf 24 nach oben gezeigt. Der Lanzenkopf 24 befindet sich im unteren Endabschnitt des Abstichlochs 12.

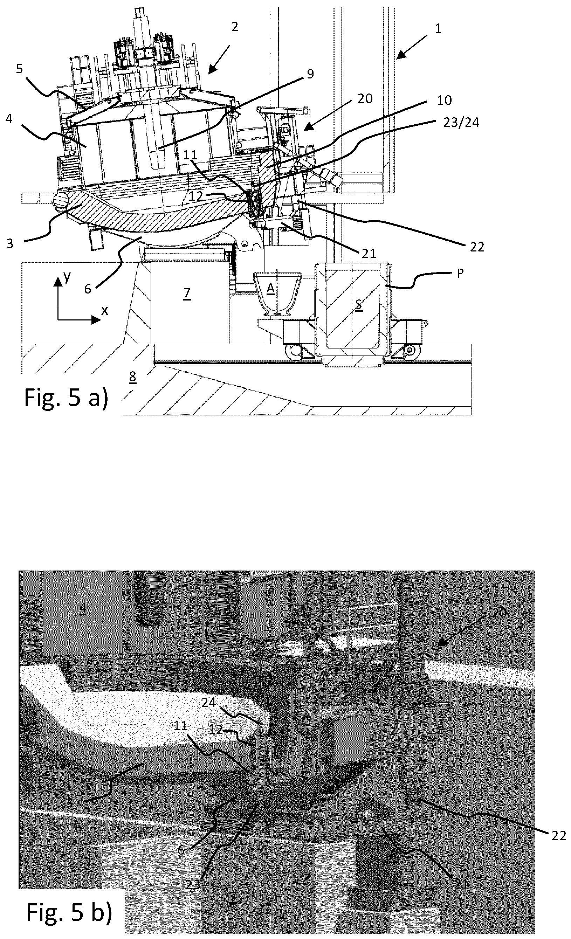

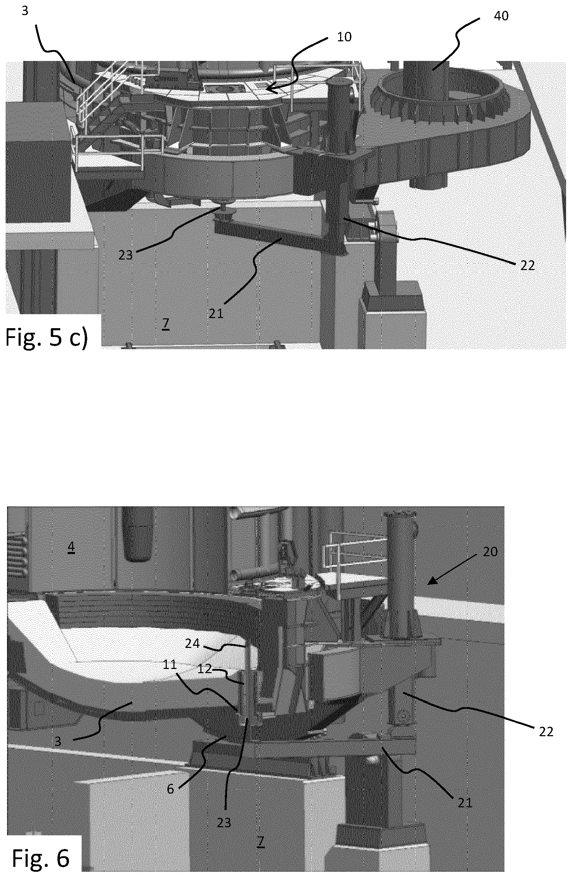

In Fig. 5 sind in a), b) und c) der Fig. 3 vergleichbare Ansichten gezeigt. In der gezeigten Stellung ist der Schwenkarm 21 in der Pflegeposition und die Säule 22 und damit die Lanze 23 sind soweit nach oben gefahren, dass der Lanzenkopf 24 oberhalb der oberen Öffnung des Abstichlochs 12 befindlich ist.

In Fig. 6 ist eine den Fig. 3 b) und 5 b) vergleichbare Ansicht gezeigt. Der Lanzenkopf 24 befindet sich an seiner oberen Endposition. Die Länge der Lanze 23 und die Länge der Verfahrwege sind bevorzugt so gewählt, dass das obere Ende der Lanzenspitze 24 wenigstens 300 mm über das Abstichloch 12 vorragt. D.h., die Länge der Lanze bis zur Spitze des Lanzenkopfs beträgt vorzugsweise mindestens Länge des Aufbaus des Ofens um das Abstichloch in dessen Längsrichtung (=Höhe) mit Feuerfestauskleidung, Ofengefäßmantel, Anbauten wie Schiebervorrichtung etc. plus 300 mm, damit der Lanzenkopf bis zu 300 mm aus dem Abstichloch nach oben ausfahren kann.

Durch diese Hubbewegung sollen kleinere Störkörper, die in oder auf dem Abstichloch 12 liegen, entfernt werden. Größere Störkörper oder stark verklemmte Störkörper würden die Kraftabschaltung auslösen.

Beim Zurückfahren (Abwärtsbewegung) wird das Abstichloch dann mit Hilfe von Sauerstoff von Anhaftungen befreit. Dazu wird der Lanzenkopf 24 in umgekehrter Reihenfolge durch die gezeigten Stellungen gefahren, also in der Folge der Fig. 5, 4, 3.

Es werden drei Positionen für den Schwenkarm 21 vorgesehen. Die beschriebene Pflegeposition unter dem Abstichloch. Die beschriebene Parkposition zwischen Pfanne und Fundament (portalseitig). Diese Parkposition muss das Kippen des Ofens ermöglichen bzw. nicht behindern.

Und eine bis jetzt nicht beschriebene Wartungsposition, in der z.B. ein Wechsel der Lanze erfolgt. In dieser Wartungsposition ist auch die Bestückung der Lanze mit einem Abstichlochsteins möglich. Dann wird auch ein teil-automatisierter Austausch des Abstichlochsteins möglich, jedoch nur in einer waagrechten, gegen Kippen verriegelten, Stellung des ELBO.

Die Gestaltung des Lanzenkopfs 24 wird nachfolgend beschrieben. In Fig. 8 eine erste Ausführungsform eines Lanzenkopfs in einer perspektivischen Ansicht in a) in einer Außenansicht und in b) in einer aufgeschnittenen Ansicht dargestellt. Der Lanzenkopf 24 ist an dem Ende eines Rohrs 26 der Lanze 23 über eine Gewindeverbindung 25 angebracht. In dem Rohr 26 ist eine Sauerstoffleitung 27 geführt, die in einem zentralen Blindloch des Lanzenkopfs 24 endet. Von dem vorderen Ende des zentralen Blindloch des Lanzenkopfs erstrecken sich in Umfangsrichtung verteilte Bohrungen 31 unter einem Winkel von 45° zu der Längsachse L2 nach außen und hinten (in Richtung des Schwenkarms). Die Bohrungen 31 bilden Düsen zum Ausstoßen von Sauerstoff, der über die Leitung 27 unter Druck zugeführt wird. Für ein Abstichloch 12 mit einem vorgegebenen anfänglichen Durchmesser von 180 mm hat der Lanzenkopf 24 einen Außendurchmesser, der 40 mm bis 60 mm geringer ist, also z.B. 130 mm, damit bei optimaler Justierung auf beiden Seiten 20mm bis 30 mm Spiel, im Beispiel 25 mm Spiel, vorhanden sind.

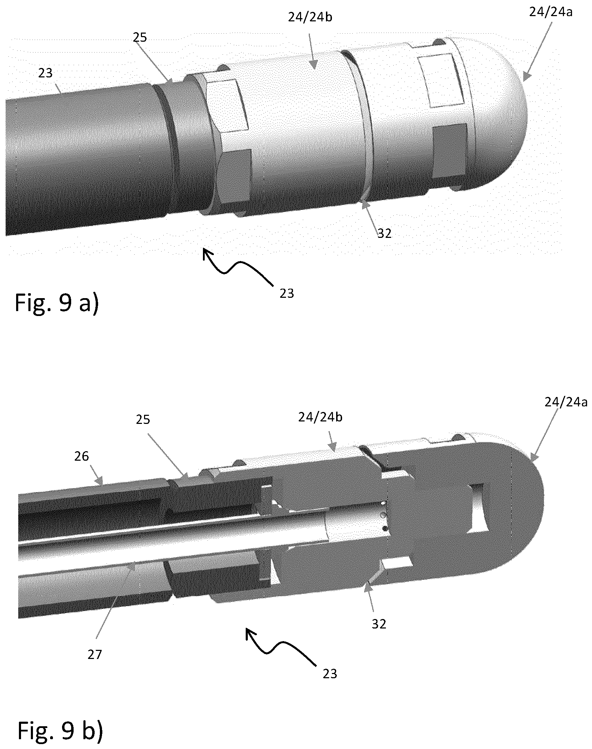

In Fig. 9 ist eine zweite Ausführungsform eines Lanzenkopfs in einer perspektivischen Ansicht in a) in einer Außenansicht und in b) in einer aufgeschnittenen Ansicht gezeigt. Der Lanzenkopf 24 der zweiten Ausführungsform unterscheidet sich von der ersten Ausführungsform dadurch, dass er zweiteilig mit einem Vorderteil 24a und einem Hinterteil 24b ausgeführt ist und einen umlaufenden Düsenschlitz 32 aufweist. Das Hinterteil 24b weist wiederum ein zentrales Blindloch auf, in das die Sauerstoffleitung 27 mündet. Von dem vorderen Ende des zentralen Blindloch des Lanzenkopfs erstrecken wieder sich in Umfangsrichtung verteilte Bohrungen, aber radial nach außen. Das Vorderteil ist an dem vorderen Ende des Hinterteils unter Bildung eines umlaufenden Ringraums, in den die radialen Bohrungen münden, befestigt. Ein unter einem Winkel von 45° zu der Längsachse L2 nach außen und hinten (in Richtung des Schwenkarms) verlaufender Ringspalt verbindet den Ringraum und die seitliche Außenwand des Lanzenkopfs zum Bilden einer Düse zum Ausstoßen von Sauerstoff, der über die Leitung 27 unter Druck zugeführt wird.

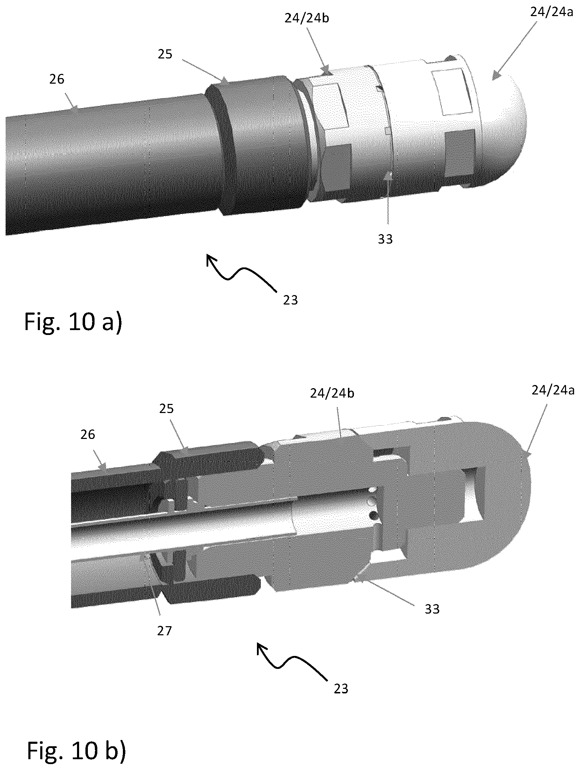

In Fig. 10 ist eine dritte Ausführungsform eines Lanzenkopfs in einer perspektivischen Ansicht in a) in einer Außenansicht und in b) in einer aufgeschnittenen Ansicht gezeigt. Der Lanzenkopf 24 der dritten Ausführungsform unterscheidet sich von der zweiten Ausführungsform dadurch, dass er anstelle des umlaufenden Düsenschlitzes 32 mehrere in Umfangsrichtung verteilte Düsenkanäle 33 aufweist, die durch Nuten zwischen dem Hinterteil 24b und dem Vorderteil 24a gebildet sind. Die Düsenkanäle 33 verlaufen wieder unter einem Winkel von 45° zu der Längsachse L2 nach außen und hinten (in Richtung des Schwenkarms) und verbinden den Ringraum und die seitliche Außenwand des Lanzenkopfs zum Bilden von Düsen 33 zum Ausstoßen von Sauerstoff, der über die Leitung 27 unter Druck zugeführt wird.

Der Winkel der Düsenkanäle 31, 33 und des Düsenschlitzes 32 kann im Bereich von 30° bis 60, bevorzugt 40° bis 50°, derzeit bevorzugt 45° liegen. Die Zahl der Bohrungen und Düsenkanäle kann 6 bis 15, bevorzugt 8 bis 12, z.B. 9 sein. Der Querschnitt der Bohrungen und Düsenkanäle liegt bevorzugt im Bereich von 15 bis 30 mm², z. B. 20 oder 21 oder 22 oder 23 oder 24 oder 25 mm². Also z.B. einen runden Querschnitt von 5 mm Durchmesser (ca. 20 mm²) oder einen rechteckigen Querschnitt von 4 mm x 6 mm (24 mm²). Die Höhe des Ringspalts ist bevorzugt im Bereich von 0,1 mm bis 3 mm, z.B. 0,5 mm oder 1 mm.

In den gezeigten Ausführungsformen ist der Schwenkarm 21 gerade und rechtwinkelig zu der Lanze 23 ausgebildet. Natürlich könnte der Schwenkarm auch gebogen und/oder schräg zu der Lanze 23 ausgebildet sein und die Lanze 23 entsprechend an dem Endabschnitt des Schwenkarms angebracht werden, so dass die Ausrichtung der Längsachsen L1 und L2 erzielt werden kann.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Abstichlochpflegevorrichtung (20) zum Reinigen des Bodenabstichlochs (12) eines elektrischen Lichtbogenofens (1), der ein Ofengefäß (2) mit einem Ofenuntergefäß (3) mit einem exzentrischen oder seitlichen Bodenabstichloch (12) mit einem Mindestdurchmesser längs einer Längsachse (L1) desselben, und eine Ofenkippvorrichtung mit Wiege (6), auf der das Ofengefäß (2) lagert, zum Kippen des Ofengefäßes relativ zu der Horizontalen eines Fundaments (7), auf dem der elektrische Lichtbogenofen lagert, aufweist, die
- einen Schwenkarm (21) aufweist, der zwischen einer Parkposition und einer Pflegeposition verschwenkbar ist, und
- eine Lanze (23) aufweist, die an einem Endabschnitt (21e) des Schwenkarms (21) befestigt ist und sich entlang einer Längsachse (L2) erstreckt,
bei der die Lanze (23) einen Lanzenkopf (24) aufweist, der entlang der Längsachse (L2) der Lanze (23) zwischen einer unteren Endposition und einer oberen Endposition verfahrbar ist und der einen Außendurchmesser aufweist, der kleiner als der Mindestdurchmesser des Bodenabstichlochs (12) ist und der seitliche Sauerstoffaustrittdüsen (31, 32, 33) mit einem Austrittswinkel schräg zur Längsachse (L2) der Lanze (23) nach unten aufweist, vorzugsweise mit einem Austrittswinkel im Bereich von 30° bis 60°, bevorzugt 45°, und
die zur Befestigung an dem Ofengefäß (2) und/oder an der Wiege (6) derart angepasst ist, dass sie beim Kippen des Ofengefäßes (2) mit diesem zusammen bewegbar ist und die Lanze (23) in der Pflegeposition des Schwenkarms (21) unter dem Abstichloch (12) befindlich ist und dabei die Längsachse (L2) der Lanze (23) koaxial zu der Längsachse (L1) des Abstichlochs (12) ist, so dass der Lanzenkopf (24) beim Verfahren zwischen seiner unteren Endposition und seiner oberen Endposition durch das Abstichloch (12) bewegbar ist.

2. Abstichlochpflegevorrichtung nach Anspruch 1, die
eine um eine Drehachse (D) drehbar gelagerte Säule (22), die längs ihrer Drehachse auf und ab verfahrbar ist, aufweist, die zur Befestigung an dem Ofengefäß (2) und/oder an der Wiege (6) des elektrischen Lichtbogenofens derart angepasst ist, dass ihre Drehachse (D) parallel zu der Längsachse (L2) des Abstichlochs (12) ist.

3. Abstichlochpflegevorrichtung nach Anspruch 2, bei der
der Schwenkarm (21) ein Ausleger der drehbar gelagerten Säule (22) ist und eine Drehbewegung der Säule (22) zu einer Schwenkbewegung des Schwenkarms (21) um die Drehachse (D) führt.

4. Abstichlochpflegevorrichtung nach einem der vorhergehenden Ansprüche, bei der die Befestigungsposition der Lanze (23) an dem Endabschnitt (21e) des Schwenkarms (21) in einer radialen Richtung senkrecht zu der Achse (D) der Schwenkbewegung des Schwenkarms (22) verstellbar ist.

5. Abstichlochpflegevorrichtung nach einem der vorhergehenden Ansprüche, bei der die Verfahrwege der Schwenkbewegung des Schwenkarms (21) und der Bewegung des Lanzenkopfs (24) erfasst werden.

6. Abstichlochpflegevorrichtung nach einem der vorhergehenden Ansprüche, bei der die Lanze (23) einen Lanzenschaft (26) aufweist, in dem eine Sauerstoffzufuhrleitung (27) aufgenommen ist.

7. Abstichlochpflegevorrichtung nach einem der vorhergehenden Ansprüche, bei der der Lanzenkopf (24) dornförmig und austauschbar mit einem Schaft der Lanze (23), beispielsweise über eine Gewindeverbindung (25), verbunden ist.

8. Abstichlochpflegevorrichtung nach einem der vorhergehenden Ansprüche, bei der der Schwenkarm (21) wassergekühlt ist.

9. Abstichlochpflegevorrichtung nach einem der vorhergehenden Ansprüche, die dazu angepasst ist, dass mindestens das Verfahren des Lanzenkopfs (24) zwischen der oberen Endposition und der unteren Endposition automatisiert erfolgt.

10. Abstichlochpflegevorrichtung nach Anspruch 9, bei der
das automatisierte Verfahren des Lanzenkopfs (24) zwischen der unteren Endposition und der oberen Endposition so erfolgt, dass bei Erreichen eines Grenzwertes für den von dem Lanzenkopf ausgeübte Kraft das automatisierte Verfahren des Lanzenkopfs gestoppt wird.

11. Elektrischer Lichtbogenofen (1) mit
einem Ofengefäß (2) mit einem Ofenuntergefäß (3) mit einem exzentrischen oder seitlichen Bodenabstichloch (12), das einen Mindestdurchmesser längs einer Längsachse (L1) desselben aufweist,
einer Ofenkippvorrichtung mit Wiege (6), auf der das Ofengefäß (2) lagert, zum Kippen des Ofengefäßes relativ zu der Horizontalen eines Fundaments (7), auf dem der elektrische Lichtbogenofen steht, und
einer Abstichlochpflegevorrichtung (20) nach einem der Ansprüche 1 bis 10,
bei dem die Abstichlochpflegevorrichtung an dem Ofengefäß (2) und/oder an der Wiege (6) befestigt und so beim Kippen des Ofengefäßes (2) mit diesem zusammen bewegbar ist und die Lanze (23) in der Pflegeposition des Schwenkarms (21) unter dem Abstichloch (12) befindlich ist und dabei die Längsachse (L2) der Lanze (23) koaxial zu der Längsachse (L1) des Abstichlochs (12) ist, so dass der Lanzenkopf (24) beim Verfahren zwischen seiner unteren Endposition und seiner oberen Endposition durch das Abstichloch (12) bewegbar ist.

12. Elektrischer Lichtbogenofen nach Anspruch 11, bei dem
ein Portal (40) zum Heben und Senken eines Ofendeckels (5) und einer Elektrodenanordnung (9) vorgesehen ist, das seitlich neben dem Ofengefäß in Bezug auf die Kippbewegung angeordnet ist, und
die Parkposition des Schwenkarms (21) seitlich neben dem Abstichloch auf derselben Seite des Ofengefäßes (2) wie das Portal (40) befindlich ist.

13. Verfahren zum Reinigen des Abstichlochs (12) eines elektrischen Lichtbogenofens (1) mit einem Ofengefäß (2) mit einem Ofenuntergefäß (3) mit einem exzentrischen oder seitlichen Bodenabstichloch (12), das einen Mindestdurchmesser längs einer Längsachse (L1) desselben aufweist, und einer Abstichlochpflegevorrichtung (20) zum Reinigen des Bodenabstichlochs (12), die eine Lanze (23) aufweist, die sich entlang einer Längsachse (L2) erstreckt und einen Lanzenkopf (24) aufweist, der entlang der Längsachse (L2) der Lanze (23) zwischen einer oberen Endposition und einer unteren Endposition verfahrbar ist und der einen Außendurchmesser aufweist, der kleiner als der Mindestdurchmesser des Bodenabstichlochs (12) ist, und der seitliche Sauerstoffaustrittdüsen (31, 32, 33) mit einem Austrittswinkel schräg zur Längsachse (L2) der Lanze (23) nach unten aufweist, vorzugsweise mit einem Austrittswinkel im Bereich von 30° bis 60°, bevorzugt 45°, und die Lanze (23) unter dem Abstichloch (12) so positionierbar ist, dass die Längsachse (L2) der Lanze (23) koaxial zu der Längsachse (L1) des Abstichlochs (12) ist,
bei dem
der Lanzenkopf (24) in einem ersten Schritt zwischen seiner unteren Endposition und seiner oberen Endposition von unten durch das Abstichloch (12) bewegt wird, und
der Lanzenkopf (24) in einem zweiten Schritt zwischen seiner oberen Endposition und seiner unteren Endposition von oben durch das Abstichloch (12) zurück bewegt wird und dabei Sauerstoff durch die seitliche Sauerstoffaustrittdüsen (31, 32, 33) ausgestoßen wird.

14. Verfahren nach Anspruch 13, bei dem
die Bewegung des Lanzenkopfs (24) in dem ersten Schritt automatisiert derart erfolgt, dass bei Erreichen eines Grenzwertes für eine von dem Lanzenkopf ausgeübte Kraft das automatisierte Verfahren des Lanzenkopfs gestoppt wird.

15. Verfahren nach Anspruch 13 oder 14, bei dem
der Lanzenkopf (24) bis zu 300 mm aus dem Abstichloch (12) nach oben ausgefahren wird.

## Claims

1. A tap hole maintenance device (20) for cleaning the bottom tap hole (12) of an electric arc furnace (1), which electric arc furnace comprises a furnace vessel (2) having a furnace lower vessel (3) with an eccentric or offset bottom tap hole (12) having a minimum diameter along a longitudinal axis (L1) thereof, and a furnace tilting device comprising a cradle (6), on which the furnace vessel (2) is supported, for tilting the furnace vessel relative to the horizontal of a foundation (7), on which the electric arc furnace is supported,
which tap hole maintenance device comprises
- a pivot arm (21) that is adapted to be pivoted between a parking position and a maintenance position, and
- a lance (23) attached to an end portion (21e) of the pivot arm (21) and extending along a longitudinal axis (L2),
wherein the lance (23) comprises a lance head (24), which lance head is movable along the longitudinal axis (L2) of the lance (23) between a lower end position and an upper end position and which lance head comprises an outer diameter which is smaller than the minimum diameter of the bottom tap hole (12) and which lance head comprises lateral oxygen outlet nozzles (31, 32, 33) with an outlet angle oblique downwards to the longitudinal axis (L2) of the lance (23), preferably with an outlet angle in the range of 30° to 60°, preferably 45°, and which lance is adapted for attachment to the furnace vessel (2) and/or to the cradle (6) in such a way that it is movable together with the furnace vessel (2) when the latter is tilted and the lance (23) is located under the tap hole (12) with the longitudinal axis (L2) of the lance (23) being coaxial with the longitudinal axis (L1) of the tap hole (12) in the maintenance position of the pivot arm (21), so that the lance head (24) is movable through the tap hole (12) during movement between its lower end position and its upper end position.

2. The tap hole maintenance device according to claim 1, further comprising a column (22) which is rotatably supported about an axis of rotation (D) and is movable up and down along its axis of rotation, the column being adapted for attachment to the furnace vessel (2) and/or to the cradle (6) of the electric arc furnace such that its axis of rotation (D) is parallel to the longitudinal axis (L2) of the tap hole (12).

3. The tap hole maintenance device according to claim 2, wherein
the pivot arm (21) is an extension arm of the rotatably supported column (22) and a rotary movement of the column (22) results in a pivot movement of the pivot arm (21) about the axis of rotation (D).

4. The tap hole maintenance device according to any one of the preceding claims, wherein the attachment position of the lance (23) to the end portion (21e) of the pivot arm (21) is adjustable in a radial direction perpendicular to the axis (D) of the pivotal movement of the pivot arm (22).

5. The tap hole maintenance device according to any one of the preceding claims, further comprising detectors for the movement paths of the pivotal movement of the pivot arm (21) and of the movement of the lance head (24) are detected.

6. The tap hole maintenance device according to any one of the preceding claims, wherein the lance (23) comprises a lance shaft (26) in which an oxygen supply line (27) is received.

7. The tap hole maintenance device according to any one of the preceding claims, wherein the lance head (24) is mandrel-shaped and is exchangeably connected to a shaft of the lance (23), for example via a threaded connection (25).

8. The tap hole maintenance device according to any one of the preceding claims, wherein the pivot arm (21) is water-cooled.

9. The tap hole maintenance device according to any one of the preceding claims, which is adapted to an automated movement of at least the lance head (24) between the upper end position and the lower end position.

10. The tap hole maintenance device according to claim 9, wherein the automated movement of the lance head (24) between the lower end position and the upper end position is made such that, when a limit value for the force exerted by the lance head is reached, the automated movement of the lance head is stopped.

11. An electric arc furnace (1) comprising
a furnace vessel (2) having a furnace lower vessel (3) with an eccentric or offset bottom tap hole (12) having a minimum diameter along a longitudinal axis (L1) thereof,
a furnace tilting device comprising a cradle (6) on which the furnace vessel (2) is supported, for tilting the furnace vessel relative to the horizontal of a foundation (7) on which the electric arc furnace is supported, and
a tap hole maintenance device (20) according to any one of claims 1 to 10,
wherein the tap hole maintenance device is attached to the furnace vessel (2) and/or to the cradle (6) and thus movable together with the furnace vessel (2) when the latter is tilted, and the lance (23) is located below the tap hole (12) in the maintenance position of the pivot arm (21) with the longitudinal axis (L2) of the lance (23) being coaxial with the longitudinal axis (L1) of the tap hole (12) such that the lance head (24) is movable through the tap hole (12) during movement between its lower end position and its upper end position.

12. The electric arc furnace of claim 11, wherein
a gantry (40) for lifting and lowering a furnace lid (5) and an electrode assembly (9) is provided, which is arranged laterally adjacent to the furnace vessel with respect to the tilting movement, and
the parking position of the pivot arm (21) is located laterally next to the tap hole on the same side of the furnace vessel (2) as the gantry (40).

13. A method of cleaning the tap hole (12) of an electric arc furnace (1) comprising a furnace vessel (2) having a furnace lower vessel (3) with an eccentric or offset bottom tap hole (12) having a minimum diameter along a longitudinal axis (L1) thereof, and a tap hole maintenance device (20) for cleaning the bottom tap hole (12) comprising a lance (23) extending along a longitudinal axis (L2) and having a lance head (24), which is movable along the longitudinal axis (L2) of the lance (23) between an upper end position and a lower end position and which comprises an outer diameter smaller than the minimum diameter of the bottom tap hole (12) and which comprises lateral oxygen outlet nozzles (31, 32, 33) with an exit angle oblique downwards to the longitudinal axis (L2) of the lance (23), preferably with an exit angle in the range of 30° to 60°, preferably 45°, which lance (23) is adapted to be positioned under the tap hole (12) in such a way that the longitudinal axis (L2) of the lance (23) is coaxial with the longitudinal axis (L1) of the tap hole (12), wherein
the lance head (24) is moved in a first step between its lower end position and its upper end position from below and through the tap hole (12), and
in a second step, the lance head (24) is moved back through the tap hole (12) from above between its upper end position and its lower end position, thereby ejecting oxygen through the lateral oxygen outlet nozzles (31, 32, 33).

14. The method according to claim 13, wherein
the movement of the lance head (24) in the first step is automated in such a way that when a limit value for a force exerted by the lance head is reached, the automated movement of the lance head is stopped.

15. The method according to claim 13 or 14, wherein
the lance head (24) is moved to its upper end position with a distance of its upper end 300 mm upward from the tap hole (12)

## Revendications

1. Dispositif d'entretien de trou de coulée (20) pour le nettoyage du trou de coulée de fond (12) d'un four à arc électrique (1), comprenant une cuve de four (2) avec une cuve de four inférieure (3) avec un trou de coulée de fond (12) excentrique ou latéral avec un diamètre minimal le long d'un axe longitudinal (L1) de celui-ci, et un dispositif de basculement du four avec un berceau (6), sur lequel repose la cuve de four (2) pour basculer la cuve de four par rapport à l'horizontale d'une base (7) sur laquelle repose le four à arc électrique, qui
- comprend un bras pivotant (21) qui est apte à être pivoté entre une position de stationnement et une position d'entretien, et
- comprend une lance (23) qui est fixée à une partie terminale (2le) du bras pivotant (21) et qui s'étend le long d'un axe longitudinal (L2),
dans lequel la lance (23) comprend une tête de lance (24) qui est apte à être déplacée le long de l'axe longitudinal (L2) de la lance (23) entre une position finale inférieure et une position finale supérieure, et qui a un diamètre extérieur qui est inférieur au diamètre minimal du trou de coulée de fond (12), et qui comprend des buses de sortie d'oxygène latérales (31, 32, 33) avec un angle de sortie incliné vers le bas par rapport à l'axe longitudinal (L2) de la lance (23), de préférence avec un angle de sortie dans la plage de 30° à 60°, de préférence de 45°, et
qui est adapté pour être fixé à la cuve de four (2) et/ou à le berceau (6) de sorte que, lorsque la cuve de four (2) est basculée, il est apte à être déplacé avec celle-ci, et la lance (23), dans la position d'entretien du bras pivotant (21), est située sous le trou de coulée (12) avec l'axe longitudinal (L2) de la lance (23) étant coaxial par rapport à l'axe longitudinal (LI) du trou de coulée (12), de sorte que la tête de lance (24), lors de son déplacement entre sa position finale inférieure et sa position finale supérieure, est déplaçable à travers le trou de coulée (12).

2. Dispositif d'entretien de trou de coulée selon la revendication 1, qui
comprend une colonne (22) montée rotative autour d'un axe de rotation (D), apte à être déplacé en haut et en bas le long de son axe de rotation, qui est adapté pour être fixé à la cuve de four (2) et/ou au berceau (6) du four à arc électrique de sorte que son axe de rotation (D) est parallèle à l'axe longitudinal (L2) du trou de coulée (12).

3. Dispositif d'entretien de trou de coulée selon la revendication 2, dans lequel
le bras pivotant (21) est une flèche de la colonne (22) montée rotative, et un mouvement de rotation de la colonne (22) entraîne un mouvement de pivotement du bras pivotant (21) autour de l'axe de rotation (D).

4. Dispositif d'entretien de trou de coulée selon l'une des revendications précédentes, dans lequel
la position de montage de la lance (23) à la partie terminale (21e) du bras pivotant (21) est réglable dans une direction radiale perpendiculaire à l'axe (D) du mouvement de pivotement du bras pivotant (22).

5. Dispositif d'entretien de trou de coulée selon l'une des revendications précédentes, dans lequel
les trajectoires de déplacement du mouvement de pivotement du bras pivotant (21) et du mouvement de la tête de lance (24) sont enregistrés.

6. Dispositif d'entretien de trou de coulée selon l'une des revendications précédentes, dans lequel
la lance (23) comprend une tige de lance (26), dans laquelle est reçue une conduite d'alimentation en oxygène (27).

7. Dispositif d'entretien de trou de coulée selon l'une des revendications précédentes, dans lequel
la tête de lance (24) est en forme d'épine et est connectée de manière interchangeable avec une tige de la lance (23), par exemple via une connexion filetée (25).

8. Dispositif d'entretien de trou de coulée selon l'une des revendications précédentes, dans lequel
le bras pivotant (21) est refroidi à l'eau.

9. Dispositif d'entretien de trou de coulée selon l'une des revendications précédentes, qui est adapté de manière qu'au moins le mouvement de la tête de lance (24) entre la position finale supérieure et la position finale inférieure soit automatisé.

10. Dispositif d'entretien de trou de coulée selon la revendication 9, dans lequel
le mouvement automatisé de la tête de lance (24) entre la position finale inférieure et la position finale supérieure est effectué de telle manière que lorsqu'une valeur limite est atteinte pour la force exercée par la tête de lance, le mouvement automatisé de la tête de lance est arrêté.

11. Four à arc électrique (1) avec une cuve de four (2) avec une cuve de four inférieure (3) avec un trou de coulée de fond (12) excentrique ou latéral, qui a un diamètre minimal le long d'un axe longitudinal (L1) de celui-ci,
un dispositif de basculement du four avec un berceau (6), sur lequel repose la cuve de four (2) pour basculer la cuve de four par rapport à l'horizontale d'une base (7) sur laquelle repose le four à arc électrique, et
un dispositif d'entretien de trou de coulée (20) selon l'une des revendications 1 à 10,
dans lequel le dispositif d'entretien de trou de coulée est fixé à la cuve de four (2) et/ou à le berceau (6), et par conséquent, lorsque la cuve de four (2) est basculée, est apte à être déplacé avec celle-ci, et la lance (23), dans la position d'entretien du bras pivotant (21), est située sous le trou de coulée (12) avec l'axe longitudinal (L2) de la lance (23) étant coaxial par rapport à l'axe longitudinal (L1) du trou de coulée (12), de sorte que la tête de lance (24), lors de son déplacement entre sa position finale inférieure et sa position finale supérieure, est déplaçable à travers le trou de coulée (12).

12. Four à arc électrique selon la revendication 11, dans lequel
un portique (40) est prévu pour soulever et abaisser un couvercle de four (5) et un agencement d'électrodes (9), qui est disposé latéralement à côté de la cuve de four par rapport au mouvement de basculement, et
la position de stationnement du bras pivotant (21) se trouve latéralement à côté du trou de coulée, du même côté de la cuve de four (2) que le portique (40).

13. Procédé pour le nettoyage du trou de coulée (12) d'un four à arc électrique (1) avec une cuve de four (2) avec une cuve de four inférieure (3) avec un trou de coulée de fond (12) excentrique ou latéral, qui a un diamètre minimal le long d'un axe longitudinal (L1) de celui-ci, et un dispositif d'entretien de trou de coulée (20) pour le nettoyage du trou de coulée de fond (12), pourvu d'une lance (23) qui s'étend le long d'un axe longitudinal (L2) et qui comprend une tête de lance (24), qui est apte à être déplacée le long de l'axe longitudinal (L2) de la lance (23) entre une position finale supérieure et une position finale inférieure, et qui a un diamètre extérieur qui est inférieur au diamètre minimal du trou de coulée de fond (12), et qui comprend des buses de sortie d'oxygène latérales (31, 32, 33) avec un angle de sortie incliné vers le bas par rapport à l'axe longitudinal (L2) de la lance (23), de préférence avec un angle de sortie dans la plage de 30° à 60°, de préférence de 45°, et la lance (23) étant positionnable sous le trou de coulée (12) de telle manière que l'axe longitudinal (L2) de la lance (23) soit coaxial par rapport à l'axe longitudinal (L1) du trou de coulée (12),
dans lequel
la tête de lance (24) est déplacée dans une première étape entre sa position finale inférieure et sa position finale supérieure, d'en bas à travers le trou de coulée (12), et la tête de lance (24) est déplacé en arrière dans une deuxième étape entre sa position finale supérieure et sa position finale inférieure, d'en haut à travers le trou de coulée (12), pendant que de l'oxygène est expulsé par les buses de sortie d'oxygène latérales (31, 32, 33).

14. Procédé selon la revendication 13, dans lequel
Le mouvement de la tête de lance (24) dans la première étape est automatisé de telle sorte que, lorsqu'une valeur limite est atteinte pour une force exercée par la tête de lance, le mouvement automatisé de la tête de lance soit arrêté.

15. Procédé selon la revendication 13 ou 14, dans lequel
la tête de lance (24) est étendue vers le haut sur 300 mm hors du trou de coulée (12).
